# EUROPÄISCHE PATENTSCHRIFT

(11) **EP 0 985 702 B1**
(45) Veröffentlichungstag und Bekanntmachung des Hinweises auf die Patenterteilung: **27.11.2002**
(21) Anmeldenummer: 99109280.0
(22) Anmeldetag: 27.05.1999
(51) Int. Cl.: C08K 5/49, C08K 5/54, C08L 31/04, C08J 5/18, C09D 5/18, C09D 131/04

(54) **Flammhemmende Dispersionszusammensetzung**
Flame retardant dispersion composition
Composition de dispersion rétardatrice aux flammes

(30) Priorität: 16.07.1998 DE 19832094
(43) Veröffentlichungstag der Anmeldung: 15.03.2000
(73) Patentinhaber: Consortium für elektrochemische Industrie GmbH, 81379 München (DE)
(72) Erfinder: Döring, Wolfgang, Dr., 80687 München (DE); Stohrer, Jürgen, Dr., 82049 Pullach (DE); Goetze, Richard, Dr., 84489 Burghausen (DE)
(74) Vertreter: Schuderer, Michael, Dr.

(56) Entgegenhaltungen:
- US-A- 3 699 188
- US-A- 4 043 987
- US-A- 4 229 329
- US-A- 4 666 960
- US-A- 4 702 861
- US-A- 5 749 948

## Beschreibung

Die Erfindung betrifft eine wäßrige Dispersion, ihre Herstellung, Verwendung und Produkte, die diese aufweisen.

Zur flammhemmenden Ausrüstung von Polymeren ist die Verwendung von halogenhaltigen Zusatzstoffen oder Comonomeren, gegebenenfalls in Kombination mit Antimonverbindungen, bekannt. Flammschutzmittel auf Basis von Metallhydroxiden wie Al(OH)₃ oder Mg(OH)₂ zeigen allgemein einen zu geringen Effekt bzw. beeinträchtigen die mechanischen Eigenschaften des Polymers aufgrund der hohen Einsatzmenge. Phosphorhaltige Flammschutzmittel wie z.B. Ammoniumpolyphosphat zeigen für sich alleine im Vergleich zu Halogenverbindungen ebenfalls geringere Effekte.

Im Falle von wässrigen Polymerdispersionen ergeben sich besondere Anforderungen an Flammschutzmittel: Diese müssen wasserlöslich oder in Wasser dispergierbar sein; die das Flammschutzmittel enthaltende Dispersion muß stabil sein, d.h. es darf nicht zu Ausflockungen oder zur Koagulation kommen; im Dispersionsfilm muß das Flammschutzmittel stabil und homogen verteilt sein.

Die DE 3803030 C2 beschreibt die Verwendung von Phosphonaten als Flammschutzmittel in Kunststoffen wie Polyurethan, Polyvinylchlorid, Polyester und Epoxidharz.

In der EP 0733638 A1 werden phosphorhaltige aromatische Dicarbonsäureester als halogenfreie Flammschutzmittel für Polyesterfaser-Materialien beschrieben.

Die DE OS 19508530 beschreibt die gleichzeitige Verwendung von funktionalisierten Monomeren und mit diesen funktionellen Gruppen reaktiven Phosphorverbindungen in wäßrigen Dispersionszusammensetzungen zur Verbesserung der Flammhemmung.

In der US 5412014 A wird ein Verfahren zur Flammschutzausrüstung von Thermoplasten oder hitzehärtbaren Harzen durch eine Mischung aus einem Siliconpolymer-Pulver (bestehend aus einem Polydiorganosiloxan und Siliciumdioxid) und einem phosphorhaltigen Flammschutzmittel beschrieben.

Der Erfindung lag die Aufgabe zugrunde den Stand der Technik zu verbessern und insbesondere wäßrige Dispersionszusammensetzungen zur Verfügung zu stellen, welche auch ohne Halogen- und Antimonverbindungen bei der späteren Verwendung, z.B. als Beschichtungs- oder Imprägnierungsmittel, einen ausreichenden Flammschutz bewirken.

Der Erfindung lag des weiteren die Aufgabe zugrunde, wäßrige Dispersionszusammensetzungen zur Verfügung zu stellen, welche sich gleichzeitig zur Verfestigung von Fasermaterialien und Watten sowie zur Textilausrüstung eignen.

Ein Gegenstand der Erfindung sind wäßrige Dispersion gemäß dem Anspruch.

Als wasserunlösliche Organopolymere eignen sich vorzugsweise Homo- und Copolymere, die in Form einer wäßrigen Dispersion vorliegen und welche, gegebenenfalls bei erhöhter Temperatur und/oder im alkalischen Medium, nach dem Auftrocknen und gegebenenfalls Vernetzen einen festen Film bilden.

Als wasserunlösliche Polymere bevorzugt sind:
Vinylester-Homo- oder -Copolymerisate enthaltend eine oder mehrere Monomereinheiten aus der Gruppe der Vinylester von unverzweigten oder verzweigten Alkylcarbonsäuren mit vorzugsweise 1 bis 15 C-Atomen, besonders bevorzugt 1 bis 10, ganz besonders bevorzugt 1 bis 3 C-Atomen;
(Meth)acrylsäureester-Homo- oder -Copolymerisate enthaltend eine oder mehrere Monomereinheiten aus der Gruppe der Methacrylsäureester und Acrylsäureester von unverzweigten oder verzweigten Alkoholen mit 1 bis 12 C-Atomen, besonders bevorzugt 1 bis 8, ganz besonders bevorzugt 1 bis 4 C-Atomen;
Homo- oder Copolymerisate von Fumar- und/oder Maleinsäuremonooder -diester von unverzweigten oder verzweigten Alkoholen mit 1 bis 12 C-Atomen, besonders bevorzugt 1 bis 8, ganz besonders bevorzugt 1 bis 4;
Homo- oder Copolymerisate von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert werden können;
Homo- oder Copolymerisate von Vinylaromaten wie Styrol, Methylstyrol oder Vinyltoluol.

Gegebenenfalls eignen sich auch wasserunlösliche, filmbildende Polyadditions- und Polykondensationspolymere wie Polyurethane, Polyester, Polyether (außer Polyethylenoxid), Polyamide, Melaminformaldehydharze, Phenolformaldehydharze, gegebenenfalls auch in Form ihrer oligomeren Vorprodukte.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit bis zu 15 C-Atomen, besonders bevorzugt 1 bis 10, beispielsweise VeoVa9®-Neononansäurevinylester oder VeoVa10®-Neodecansäurevinylester.

Besonders bevorzugt sind Vinylester mit einem hohen Verhältnis von O zu CH, wie Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Besonders bevorzugte Methacrylsäureester oder Acrylsäureester sind solche mit einem hohen Verhältnis von O zu CH, wie Methylacrylat und Methylmethacrylat.

Bevorzugte Estergruppen der Fumar- und Maleinsäure sind Methyl, Ethyl-, n-Propyl-, iso-Propyl-, n-Butyl-, iso-Butyl-, t-Butyl-, Hexyl-, Ethylhexyl-, und Dodecyl-Gruppe.

Besonders bevorzugte Fumar- und Maleinsäureester sind solche mit einem hohen Verhältnis von O zu CH, wie Dimethylfumarat und Dimethylmaleat.

Die Vinylester-Copolymerisate können gegebenenfalls 1,0 bis 65 Gew.%, bezogen auf das Gesamtgewicht der Comonomerphase, vorzugsweise α-Olefine wie Ethylen oder Propylen und/oder Vinylaromaten wie Styrol und/oder Acrylsäureester bzw. Methacrylsäureester von Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder ethylenisch ungesättigte Dicarbonsäureester bzw. deren Derivate wie Diisopropylfumarat, die Dimethyl-, Methyl-t-butyl-, Di-n-butyl-, Di-t-Butyl- und Diethylester der Maleinsäure bzw. Fumarsäure, oder Maleinsäureanhydrid enthalten. Besonders bevorzugt sind Acrylsäureester bzw. Methacrylsäureester von Alkoholen mit 1 bis 8 C-Atomen, ganz besonders bevorzugt mit 1 bis 4 C-Atomen wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat.

Bevorzugt enthalten die Vinylester-Copolymerisate weniger als 20 Gew.% bezogen auf das Gesamtgewicht der Comonomerphase, α-Olefine und/oder Vinylaromaten und/oder Acrylsäureester bzw. Methacrylsäureester von Alkoholen mit mehr als 4 C-Atomen und/oder ethylenisch ungesättigte Dicarbonsäureester von Alkoholen mit mehr als 4 C-Atomen, so daß ein niedriges O zu CH Verhältnis im Copolymerisat entsteht.

Die (Meth)acrylsäureester-Copolymerisate können gegebenenfalls 1,0 bis 65 Gew.%, bezogen auf das Gesamtgewicht der Comonomerphase, vorzugsweise α-Olefine wie Ethylen oder Propylen und/oder Vinylaromaten wie Styrol und/oder ethylenisch ungesättigte Dicarbonsäureester bzw. deren Derivate wie Diisopropylfumarat, die Dimethyl-, Methyl-t-butyl-, Dibutyl- und Diethylester der Maleinsäure bzw. Fumarsäure, oder Maleinsäureanhydrid enthalten.

In einer bevorzugten Ausführungsform enthalten die Vinylester-Copolymerisate und die (Meth)acrylsäureester-Copolymerisate noch 0,05 bis 10,0 Gew.%, bezogen auf das Gesamtgewicht des Comonomergemisches, vorzugsweise Hilfsmonomere aus der Gruppe der ethylenisch ungesättigten Carbonsäuren, vorzugsweise Acrylsäure oder Methacrylsäure; aus der Gruppe der ethylenisch ungesättigten Carbonsäureamide, vorzugsweise Acrylamid; aus der Gruppe der ethylenisch ungesättigten Sulfonsäuren bzw. deren Salze, vorzugsweise Vinylsulfonsäure; und/oder aus der Gruppe der mehrfach ethylenisch ungesättigten Comonomeren, beispielsweise Divinyladipat, Diallylmaleat, Allylmethacrylat oder Triallylcyanurat. Als Hilfsmonomere geeignet sind auch vernetzend wirkende Comonomere, beispielsweise Acrylamidoglykolsäure (AGA), Methylacrylamidoglykolsäuremethylester (MAGME), N-Methylolacrylamid (NMAA), N-Methylolmethacrylamid, N-Methylolallylcarbamat, Alkylether, wie der Isobutoxyether, oder Ester des N-Methylolacrylamids, des N-Methylolmethacrylamids oder des N-Methylolallylcarbamats.

Entsprechendes wie für die Vinylester-Copolymerisate und die (Meth)acrylsäureester-Copolymerisate gilt für die Copolymerisate der Ester der Malein- oder Fumarsäure.

Die Herstellung der genannten, radikalisch polymerisierbaren, wasserunlöslichen Polymere erfolgt vorzugsweise nach dem Emulsionspolymerisationsverfahren. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente. Die Polymerisation wird vorzugsweise in einem Temperaturbereich von 0 bis 100°C, besonders bevorzugt 20 bis 100°C, ganz besonders bevorzugt 30 bis 90°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0,01 bis 3,0 Gew.%, bezogen auf das Gesamtgewicht der Monomeren, eingesetzt werden. Als Dispergiermittel können alle üblicherweise bei der Emulsionspolymerisation verwendeten Emulgatoren und/oder Schutzkolloide eingesetzt werden.

Gegebenenfalls werden bis zu 6 Gew.%, bezogen auf das Gesamtgewicht der Monomeren bei der Emulsionspolymerisation, an Emulgator eingesetzt. Als Emulgatoren kommen hierbei vorzugsweise sowohl anionische, kationische als auch nichtionische Emulgatoren in Betracht, soweit diese nicht im Schutzkolloid löslich sind. Vorzugsweise werden Schutzkolloide, besonders bevorzugt in Mengen von bis zu 15 Gew.%, bezogen auf das Gesamtgewicht der Monomeren, eingesetzt. Beispiele hierfür sind vorzugsweise Polyvinylalkohole und deren Derivate wie Vinylalkohol/Vinylacetat-Copolymere, Polyvinylpyrrolidone; Polysaccharide in wasserlöslicher Form wie Stärken (Amylose und Amylopectin), Cellulose, Guar, Tragcantinsäure, Dextran, Alginate und deren Carboxymethyl-, Methyl-, Hydroxyethyl-, Hydroxypropyl-Derivate; Proteine wie Casein, Sojaprotein, Gelatine; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Die Organopolymer sind in einer Menge von vorzugsweise 30 bis 70 Gew.% besonders bevorzugt 40 bis 60 Gew.%, ganz besonders bevorzugt 40 bis 55 Gew.% bezogen auf das Gesamtgewicht der wäßrigen Dispersion enthalten.

Erfindungsgemäße in Wasser dispergierbare Siliciumverbindungen sind vorzugsweise Kieselsäureester Si(OR')₄, Organoorganoxysilane SiRₙ(OR')₄₋ₙ mit n = bis 3, Oligosiloxane der allgemeinen Formel R₃SiO(SiR₂O)ₙSiR₃ mit n = 0 bis 4 oder deren Hydrolyseund Kondensationsprodukte, wobei R' für gleiche oder verschiedene Alkylreste oder Alkoxyalkylenreste mit 1 bis 4 C-Atomen steht, vorzugsweise Methyl oder Ethyl bedeutet, und R gleich oder verschieden ist und verzweigte oder unverzweigte Alkylreste mit vorzugsweise 1 bis 22 C-Atomen, besonders bevorzugt 1 bis 10, ganz besonders bevorzugt 1 bis 4 C-Atomen, Cycloalkylreste mit vorzugsweise 3 bis 10 C-Atomen, besonders bevorzugt 5 bis 6, ganz besonders bevorzugt 6 C-Atomen, Alkylenreste mit vorzugsweise 2 bis 4 C-Atomen, Aryl-, Aralkyl-, Alkylarylreste mit vorzugsweise 6 bis 18 C-Atomen, besonders bevorzugt 6 bis 12, ganz besonders bevorzugt 6 bis 8 C-Atomen bedeutet, wobei die genannten Reste R auch mit Ether-, Thioether, Ester-, Amid-, Nitril-, Hydroxyl-, Amin-, Carboxyl-, Sulfonsäure-, Carbonsäureanhydrid- und Carbonylgruppen substituiert sein können.

Besonders bevorzugte Siliciumverbindungen sind beispielsweise Tetraethoxysilan, Methyltri(m)ethoxysilan, Methyltripropoxysilan, Methyltri(ethoxyethoxy)silan, Vinyltri(methoxyethoxy)silan, (Meth)acryloxypropyltriethoxy- oder - trimethoxysilan, β-Nitrilethyltriethoxysilan, Mercaptopropyltriethoxy- oder -trimethoxysilan, Phenyltriethoxysilan, iso-Octyltriethoxysilan, Dipropyldiethoxysilan, Methylphenyldiethoxysilan, Diphenyldimethoxysilan, Methylvinyltri(ethoxyethoxy)silan sowie deren Di- und/oder Trisiloxane. Ferner seien genannt Hexamethyldiethoxytrisiloxan, Octamethylcyclotetrasiloxan, Tetramethyldiethoxydisilan, Trimethyltrimethoxydisilan, Dimethyltetramethoxydisilan sowie Pentamethyldisilan-disiloxan.

Die genannten Siliciumverbindungen können vorzugsweise als solche oder in Form ihrer Hydrolyse- und Kondensationsprodukte eingesetzt werden.

Die genannten Siliciumverbindungen können allein oder im Gemisch eingesetzt werden.

Die Herstellung der Organosiliciumverbindungen kann nach Verfahren erfolgen wie sie in Noll, Chemie und Technologie der Silicone, 2. Auflage 1968, Weinheim und in Houben-Weyl, Methoden der organischen Chemie, Band E20, S. 1782f., 2219f., Georg Thieme Verlag, Stuttgart, 1987 beschrieben sind.

Die in Wasser dispergierbaren Organosiliciumverbindungen liegen vorzugsweise in einer Menge von 0,5 bis 60 Gew.%, besonders bevorzugt 0,5 bis 20 Gew.%, ganz besonders bevorzugt 0,5 Gew.% bis 10 Gew.% bezogen auf den Organopolymeranteil, vor.

Die Siliciumverbindungen werden bevorzugt in Form einer Emulsion der Organopolymerdispersion zugegeben. Als Emulgatoren kommen hierbei sowohl anionische, kationische als auch nichtionische Emulgatoren in Betracht. Geeignete Emulgatoren sind dem Fachmann geläufig und finden sich beispielsweise in Houben-Weyl, Methoden der organischen Chemie, Bd. XIV, 1, Makromolekulare Stoffe, Georg Thieme Verlag, Stuttgart, 1961, 192-208. Beispiele für Emulgatoren sind vorzugsweise anionische Emulgatoren:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.
   Nichtionische Emulgatoren sind vorzugsweise:
5. Polyvinylalkohol, der noch 5 bis 50 %, vorzugsweise 8 bis 20 % Vinylacetateinheiten aufweist, mit einem Polymerisationsgrad von 500 bis 3000.
6. Alkylpolyglycolether, vorzugsweise solche mit 8 bis 40 EO-Einheiten und Alkylresten von 8 bis 20 C-Atomen.
7. Alkylarylpolyglycolether, vorzugsweise solche mit 8 bis 40 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 40 EO- bzw. PO-Einheiten.
9. Additionsprodukte von Alkylaminen mit Alkylresten von 8 bis 22 C-Atomen mit Ethylenoxid oder Propylenoxid.
10. Fettsäuren mit 6 bis 24 C-Atomen.
11. Alkylpolyglykoside der allgemeinen Formel R*-O-Zₒ, worin R* einen linearen oder verzweigten, gesättigten oder ungesättigten Alkylrest mit im Mittel 8 - 24 C-Atomen und Zₒ einen Oligoglykosidrest mit im Mittel o = 1 - 10 Hexose- oder Pentoseeinheiten oder Gemischen davon bedeuten.
12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.
   Kationische Emulgatoren sind vorzugsweise:
14. Salze von primären, sekundären und tertiären Fettaminen mit 8 bis 24 C-Atomen mit Essigsäure, Schwefelsäure, Salzsäure und Phosphorsäuren.
15. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate.
16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
   Ampholytische Emulgatoren sind vorzugsweise:
17. Langkettig substituierte Aminosäuren, wie N-Alkyl-di-(aminoethyl-)glycin oder N-Alkyl-2-aminopropionsäuresalze.
18. Betaine, wie N-(3-Acylamidopropyl)-N:Ndimethylammoniumsalze mit einem C₈-C₁₈-Acylrest und Alkylimidazolium-Betaine.

Die Emulgatoren werden in der Regel in Mengen von vorzugsweise bis zu 10 Gew.%, bezogen auf die Siliciumverbindungen, eingesetzt. Bevorzugt beträgt die Menge < 1 Gew.%, bezogen auf die Organopolymeren.

Geeignete, in Wasser lösliche oder dispergierbare Phosphorverbindungen sind vorzugsweise Ester, Amide oder Esteramide der Alkyl- oder Arylphosphonsäuren, der Phosphorsäure oder der Pyrophosphorsäure, Tetrakis(hydroxyalkyl)-phosphoniumsalze, Salze der Polyphosphorsäure, insbesondere Ammoniumpolyphosphat oder Triaryl- oder Trialkylphosphinoxide.

Bevorzugte Phosphorverbindungen sind beispielsweise Methanphosphonsäurediethylester, Methanphosphonsäuredimethylester, Di(m)ethylpentaerythitdiphosphonat, (M)ethylneopentylphosphonat, Triphenylphosphat, Trikresylphosphat, Resorcin-bis-diphenylphosphat, Diphenylpentaerythritdiphosphat, Phenylneopentylphosphat, Mono- , Di- und triammonium-nitrilo-tris-methylenphosphonat, [3-[(Hydroxy-methyl)amino]-3-oxopropyl]-phosphonsäuredimethylester, Tetrakis (hydroxymethyl)-phosphoniumchlorid, Ammoniumpolyphosphat, Tritolylphosphinoxid und Triphenyl-phosphinoxid.

Besonders bevorzugte Phosphorverbindungen sind Methanphosphonsäurediethylester, Methanphosphonsäuredimethylester, Mono- , Di- und triammonium-nitrilo-tris-methylenphosphonat, [3-[(Hydroxy-methyl)amino]-3-oxopropyl]-phosphonsäuredimethylester.

Die Phosphorverbindungen werden in Mengen von vorzugsweise 0,1 bis 90 Gew.%, besonders bevorzugt von 0,1 bis 50 Gew.%, ganz besonders bevorzugt von 5 bis 30 Gew.% eingesetzt, bezogen auf das Gesamtgewicht der Organopolymeren.

Ebenfalls geeignete Phosphorverbindungen sind solche, die zusätzlich Silicium im Molekül tragen, wie beispielsweise 2-Triethoxysilyl-ethanphosphonsäurediethylester, 2-Trimethoxysilyl-ethanphosphonsäurediethylester, 3-Trimethoxysilyl-propanphosphonsäurediethylester, 2-Tri[methoxyethoxy]silyl-ethanphosphonsäurediethylester und 1,3-Bis[diethylphosphonoethyl]-tetramethyl-disiloxan.

Die Phosphorverbindungen mit Silicium im Molekül werden in Mengen von vorzugsweise 0,1 bis 90 Gew.%, besonders bevorzugt von 0,1 bis 50 Gew.%, ganz besonders bevorzugt von 5 bis 30 Gew.% eingesetzt, bezogen auf das Gesamtgewicht der Organopolymeren.

Die Phosphorverbindungen werden bevorzugt als wässrige Lösung oder in Form einer Emulsion - für deren Zusammensetzung dasselbe gilt wie bei den Siliciumverbindungen genannt - der Polymerdispersion zugegeben.

Die genannten Phosphorverbindungen können allein oder im Gemisch eingesetzt werden.

Ein weiterer Gegenstand der Erfindung ist ein Verfahren zur Herstellung einer wäßrigen Dispersion, wobei die Bestandteile miteinander vermischt werden.

Insbesondere wird eine wäßrige Polymerdispersion, Siliciumverbindung und Phosphorverbindung miteinander vermischt.

Dabei wird der Bestandteil Polymerdispersion immer als wäßrige Dispersion eingesetzt.

Der Bestandteil Siliciumkomponente kann als 100%ige Substanz oder als wäßrige Emulsion eingesetzt werden.

Der Bestandteil Phosphorkomponente kann als 100%ige Substanz oder im Falle eines Feststoffes als wäßrige Lösung oder Dispersion bzw. im Falle einer Flüssigkeit als wäßrige Lösung oder Emulsion eingesetzt werden.

Alle Kombinationen aus obigen Formulierungen sind möglich.

Bevorzugt ist eine Möglichkeit des Verfahrens, wobei eine wäßrige Polymerdispersion mit einer wäßrigen Lösung der Phosphorkomponente und einer Emulsion der Siliciumkomponente vermischt wird.

Ebenfalls bevorzugt ist eine Möglichkeit des Verfahrens, wobei eine wäßrige Polymerdispersion mit der 100%igen Phosphorkomponente und einer Emulsion der Siliciumkomponente vermischt wird.

Die Bestandteile Polymerdispersion, Siliciumkomponente und Phosphorkomponente werden durch Rühren oder Schütteln miteinander vermischt, wobei vorzugsweise die Polymerdispersion vorgelegt wird und
die Siliciumkomponente und die Phosphorkomponente anschließend zugegeben werden.
Vorzugsweise werden die Siliciumkomponente und die Phosphorkomponente zuerst vermischt und die Mischung anschließend zur Polymerdispersion gegeben.

Die erfindungsgemäßen Dispersionen werden vorzugsweise in Beschichtungsmitteln, Imprägniermitteln oder Klebstoffen verwendet. Des weiteren werden sie zur Verfestigung von faserförmigen Materialien oder Watten verwendet.

Die Dispersionszusammensetzungen können in den typischen Anwendungsbereichen eingesetzt werden. Beispielsweise in Beschichtungsmitteln und Brandschutzfarben, in Klebstoffen oder als Bindemittel für Textilien.

Besonders geeignet sind die erfindungsgemäßen Dispersionszusammensetzungen zur Verfestigung von faserförmigen Materialien wie Vliesen oder Watten sowie zur Textilveredlung.

Ein weiterer Gegenstand der Erfindung sind Fasermaterialien, die die erfindungsgemäßen Dispersionen aufweisen.

Die mit der erfindungsgemäßen Dispersionszusammensetzung behandelten Substrate sind gegenüber den unbehandelten Substraten flammhemmend ausgerüstet.

Bei der Ausrüstung von Textilien wird die erfindungsgemäße Dispersion in einer Verdünnung von vorzugsweise 5 bis 40 Gew.% in Wasser eingesetzt. Die Verdünnung wird dem jeweiligen Ausrüstungsverfahren angepaßt. So beträgt sie beim Sprühen 10 bis 25 Gew.%, beim Pflatschen 5 bis 35 Gew.% und beim Schaumauftrag 20 bis 30 Gew.%.

### Beispiele:

### Herstellung der Emulsionslösung:

0,50 g Aerosol A 102 (Halbestersalz der Sulfobernsteinsäure) und 4,60 g Genapol PF 40 (Polymerisationsprodukt aus Propylenoxid und Ethylenoxid) wurden in 232 g H₂O gelöst.

### Herstellung der Polymerfilme:

Von der Dispersion wurde mittels Rakel ein Film auf einer ebenen Unterlage so gezogen, daß nach dem Trocknen eine Filmdicke von ca. 250 µm erhalten wurde. Nach ca. 20 h Lufttrocknung wurde der Polymerfilm 5 min bei 150°C im Trockenschrank getempert. Aus dem Film wurden Stücke der Größe 140 mm x 52 mm geschnitten und mindestens 24 h im Exsikkator über Blaugel gelagert.

### Bestimmung des Sauerstoffindex (LOI) :

Die Bestimmung des *LOI* wurde nach ISO 4589 durchgeführt, mit dem Unterschied, daß die Proben vor der Messung für mindestens 24 h im Exsikkator über Blaugel gelagert wurden.

### Beispiel 1:

4,22 g Methyltriethoxysilan und 2,94 g Dimethylphosphonat (DMMP) wurden in 15,8 g der Emulsionslösung eingerührt. Die entstandene Emulsion wurde in 200 g einer vernetzbaren Vinylacetat/Butylacrylat-Dispersion (LT 420 der Wacker-Chemie GmbH) mit einem Festgehalt von 48% eingerührt und 2 h kräftig durchmischt.

Der *LOI* des erhaltenen Polymerfilms betrug 23,5.

### Beispiel 2:

8,44 g Methyltriethoxysilan und 5,88 g DMMP wurden in 31,6 g der Emulsionslösung eingerührt. Die entstandene Emulsion wurde in 200 g einer vernetzbaren Vinylacetat/Butylacrylat-Dispersion (LT 420 der Wacker-Chemie GmbH) mit einem Festgehalt von 48% eingerührt und 2 h kräftig durchmischt.

Der *LOI* des erhaltenen Polymerfilms betrug 24,2.

### Beispiel 3:

7,8 g Wacker SiP-Ester (Triethoxysilylethanphosphorsäurediethylester) wurden in 15,8 g der Emulsionslösung eingerührt. Die entstandene Emulsion wurde in 200 g einer vernetzbaren Vinylacetat/Butylacrylat-Dispersion (LT 420 der Wacker-Chemie GmbH) mit einem Festgehalt von 48% eingerührt und 2 h kräftig durchmischt.

Der *LOI* des erhaltenen Polymerfilms betrug 23,2.

### Beispiel 4:

4,22 g Methyltriethoxysilan und 6,59 g *n*-Dekanphosphonsäurediethylester wurden in 15,8 g der Emulsionslösung eingerührt. Die entstandene Emulsion wurde in 200 g einer vernetzbaren Vinylacetat/Butylacrylat-Dispersion (LT 420 der Wacker-Chemie GmbH) mit einem Festgehalt von 48% eingerührt und 2 h kräftig durchmischt.

Der *LOI* des erhaltenen Polymerfilms betrug 22,6.

### Beispiel 5:

8,44 g Wacker TES-40 (Hydrolyse- und Kondensationsprodukt von Tetraethoxysilan mit einem Si-Gehalt von 40%) und 5,88 g DMMP wurden in 31,6 g der Emulsionslösung eingerührt. Die entstandene Emulsion wurde in 200 g einer vernetzbaren Vinylacetat/Butylacrylat-Dispersion (LT 420 der Wacker-Chemie GmbH) mit einem Festgehalt von 48% eingerührt und 2 h kräftig durchmischt.

Der *LOI* des erhaltenen Polymerfilms betrug 22,7.

### Beispiel 6 (Vergleichsbeispiel):

Der *LOI* einer vernetzbaren Vinylacetat/Butylacrylat-Dispersion (LT 420 der Wacker-Chemie GmbH) ohne Zusatz von Silicium- und Phosphor-haltigen Additiven betrug 19,5.

### Beispiel 7 (Vergleichsbeispiel):

5,88 g DMMP wurden in 31,6 g der Emulsionslösung eingerührt. Die entstandene Emulsion wurde in 200 g einer vernetzbaren Vinylacetat/Butylacrylat-Dispersion (LT 420 der Wacker-Chemie GmbH) mit einem Festgehalt von 48% eingerührt und 2 h kräftig durchmischt.

Der *LOI* des erhaltenen Polymerfilms betrug 21,5.

## Patentansprüche

1. Wäßrige Dispersion herstellbar auf der Basis von zumindest einem wasserunlöslichen Organopolymer, zumindest einer in Wasser dispergierbaren Siliciumverbindung in einer Menge von 0,5 bis 60 Gew.%, wobei als Siliciumverbindungen eine oder mehrere enthalten sind aus der Gruppe der Kieselsäureester Si(OR')₄, Organoorganoxy-silane SiRₙ(OR')₄₋ₙ mit n = 1 bis 3, Oligosiloxane der allgemeinen Formel R₃SiO(SiR₂O)ₙSiR₃ mit n = 0 bis 4 oder deren Hydrolyse- und Kondensationsprodukte, wobei R' für gleiche oder verschiedene Alkylreste oder Alkoxyalkylenreste steht und R gleich oder verschieden ist und verzweigte oder unverzweigte Alkylreste, Cycloalkylreste, Alkylenreste, Aryl-, Aralkyl-, Alkylarylreste bedeutet, wobei die genannten Reste R auch mit Ether-, Thioether, Ester-, Amid-, Nitril-, Hydroxyl-, Amin-, Carboxyl-, Sulfonsäure-, Carbonsäureanhydrid- und Carbonylgruppen substituiert sein können, Tetraethoxysilan, Methyltri(m)ethoxysilan, Methyltripropoxysilan, Methyltri(ethoxyethoxy)silan, Vinyltri(methoxyethoxy)silan, (Meth)acryloxypropyltriethoxyoder -trimethoxysilan, β-Nitrilethyltriethoxysilan, Mercaptopropyltriethoxy- oder -trimethoxysilan, Phenyltriethoxysilan, iso-Octyl-triethoxysilan, Dipropyldiethoxysilan, Methylphenyldiethoxysilan, Diphenyldimethoxysilan, Methylvinyltri(ethoxyethoxy)silan sowie deren Diund/oder Trisiloxane; Hexamethyldiethoxytrisiloxan, Octamethylcyclotetrasiloxan, Tetramethyldiethoxydisilan, Trimethyltrimethoxydisilan, Dimethyltetramethoxydisilan, Pentamethyldisilan-disiloxan sowie deren Hydrolyse- und Kondensationsprodukte und zumindest einer wasserlöslichen oder dispergierbaren Phosphorverbindung oder herstellbar auf der Basis von zumindest einem wasserunlöslichen Organopolymer und von zumindest einer oder mehrere aus der Gruppe 2-Triethoxysilyl-ethanphosphonsäurediethylester, 2-Trimethoxysilyl-ethanphosphonsäurediethylester, 3-Trimethoxysilyl-propanphosphonsäuredi-ethylester, 2-Tri[methoxyethoxy]silyl-ethanphosphonsäurediethylester und 1,3-Bis[diethylphosphonoethyl]-tetramethyl-disiloxan ist.

2. Wäßrige Dispersion nach Anspruch 1, **dadurch gekennzeichnet, daß** das wasserunlösliche Organopolymer ein oder mehrere Polymere aus der Gruppe Vinylester-Homo- oder -Copolymerisate enthaltend eine oder mehrere Monomereinheiten aus der Gruppe der Vinylester von unverzweigten oder verzweigten Alkylcarbonsäuren; (Meth)acrylsäureester-Homo- oder - Copolymerisate enthaltend eine oder mehrere Monomereinheiten aus der Gruppe der Methacrylsäureester und Acrylsäureester von Alkoholen; Homo- oder Copolymerisate von Fumar- und/oder Maleinsäuremono- oder -diester von unverzweigten oder verzweigten Alkoholen; Homo- oder Copolymerisate von Dienen, sowie von Olefinen, wobei die Diene mit Styrol, (Meth)acrylsäureestern oder den Estern der Fumar- oder Maleinsäure copolymerisiert werden können; Homo- oder Copolymerisate von Vinylaromaten wie Styrol, Methylstyrol, Vinyltoluol ist.

3. Wäßrige Dispersion nach Anspruch 1, **dadurch gekennzeichnet, daß** als Phosphorverbindungen eine oder mehrere enthalten sind aus der Gruppe der Ester, Amide oder Esteramide der Alkyl- oder Arylphosphonsäuren, der Phosphorsäure oder der Pyrophosphorsäure, Tetrakis(hydroxyalkyl)-phosphoniumsalze, Salze der Polyphosphorsäure, insbesondere Ammoniumpolyphosphat oder Triaryl- oder Trialkylphosphinoxide, Methanphosphonsäurediethylester, Methanphosphonsäuredimethylester, Di(m)ethylpentaerythitdiphosphonat, (M)ethylneopentylphosphonat, Triphenylphosphat, Trikresylphosphat, Resorcin-bis-diphenylphosphat, Diphenylpentaerythritdiphosphat, Phenylneopentylphosphat, Mono- , Di- und triammonium-nitrilo-tris-methylenphosphonat, [3-[(Hydroxymethyl)amino]-3-oxopropyl]-phosphonsäuredimethylester, Tetrakis(hydroxymethyl)-phosphoniumchlorid, Ammoniumpolyphosphat, Tritolylphosphinoxid und Triphenylphosphinoxid.

4. Verfahren zur Herstellung einer wäßrigen Dispersion nach einem oder mehreren der Ansprüche 1 bis 3, **dadurch gekennzeichnet, daß** die Bestandteile miteinander zu einer wäßrigen Dispersion vermischt werden.

5. Verfahren zur Herstellung einer wäßrigen Dispersion nach Anspruch 4, **dadurch gekennzeichnet, daß** eine wäßrige Polymerdispersion mit den Silicium- und Phosphorverbindungen vermischt wird.

6. Verfahren zur Herstellung einer wäßrigen Dispersion nach Anspruch 4, **dadurch gekennzeichnet, daß** eine wäßrige Polymerdispersion mit einer Lösung, Emulsion oder Dispersion der Siliciumverbindungen und einer Lösung, Emulsion oder Dispersion der Phosphorverbindungen vermischt wird.

7. Verfahren zur Herstellung einer wäßrigen Dispersion nach Anspruch 6, **dadurch gekennzeichnet, daß** eine wäßrige Polymerdispersion mit einer wäßrigen Lösung der Phosphorkomponente und einer Emulsion der Siliciumkomponente vermischt wird.

8. Verfahren zur Herstellung einer wäßrigen Dispersion nach Anspruch 6, **dadurch gekennzeichnet, daß** eine wäßrige Polymerdispersion mit der 100%igen Phosphorkomponente und einer Emulsion der Siliciumkomponente vermischt wird.

9. Verwendung von Dispersionen nach einem oder mehreren der Ansprüche 1 bis 3 oder hergestellt nach einem der Ansprüche 4 bis 8 in Beschichtungsmitteln, Imprägniermitteln oder Klebstoffen.

10. Verwendung von Dispersionen nach einem oder mehreren der Ansprüche 1 bis 3 oder hergestellt nach einem der Ansprüche 4 bis 8 zur Verfestigung von faserförmigen Materialien oder Watten.

11. Fasermaterial, **dadurch gekennzeichnet, daß** es mit Dispersionen nach einem oder mehreren der Ansprüche 1 bis 3 oder hergestellt nach einem der Ansprüche 4 bis 8 behandelt wurde.

## Claims

1. Aqueous dispersion which can be prepared from at least one water-insoluble organopolymer, from at least one water-dispersible silicon compound in an amount of from 0.5 to 60% by weight, where compounds which may be present as silicon compounds are selected from the class consisting of the silicic esters Si(OR')₄, organoorganoxysilanes SiRₙ(OR')₄₋ₙ, where n = from 1 to 3, oligosiloxanes of the general formula R₃SiO(SiR₂O)ₙSiR₃, where n = from 0 to 4, and hydrolysis and condensation products of these, where R' is identical or different alkyl radicals or alkoxyalkylene radicals, and R is identical or different branched or unbranched alkyl radicals, cycloalkyl radicals, alkylene radicals, aryl radicals, aralkyl radicals, or alkylaryl radicals, where the radicals R mentioned may also have substitution with ether groups, thioether groups, ester groups, amide groups, nitrile groups, hydroxy groups, amine groups, carboxy groups, sulphonic acid groups, carboxylic anhydride groups, or carbonyl groups, tetraethoxysilane, methyltri(m)ethoxysilane, methyltripropoxysilane, methyltri(ethoxyethoxy)silane, vinyltri(methoxyethoxy)silane, (meth)acryloxypropyltriethoxy or -trimethoxysilane, β-nitriloethyltriethoxysilane, mercaptopropyltriethoxy- or -trimethoxysilane, phenyltriethoxysilane, isooctyltriethoxysilane, dipropyldiethoxysilane, methylphenyldiethoxysilane, diphenyldimethoxysilane, methylvinyltri(ethoxyethoxy)silane, and their di- and/or trisiloxanes; hexamethyldiethoxytrisiloxane, octamethylcyclotetrasiloxane, tetramethyldiethoxydisilane, trimethyltrimethoxydisilane, dimethyltetramethoxydisilane, pentamethyldisilanedisiloxane, and also their hydrolysis and condensation products, and from at least one water-soluble or dispersible phosphorus compound, or which can be prepared from at least one water-insoluble organopolymer and from at least one or more compounds selected from the class consisting of diethyl 2-triethoxysilylethanephosphonate, diethyl 2-trimethoxysilylethanephosphonate, diethyl 3-trimethoxysilylpropanephosphonate, diethyl 2-tri[methoxyethoxy]silylethanephosphonate, and 1,3-bis[diethylphosphonoethyl]tetramethyldisiloxane.

2. Aqueous dispersion according to Claim 1, **characterized in that** the water-insoluble organopolymer is one or more polymers selected from the class consisting of vinyl ester homo- or copolymers containing one or more monomer units selected from the class consisting of the vinyl esters of unbranched or branched alkylcarboxylic acids; (meth)acrylate homopolymers or (meth)acrylate copolymers containing one or more monomer units selected from the class consisting of the methacrylates and acrylates of alcohols; homo- or copolymers of fumaric and/or maleic mono- or diesters of unbranched or branched alcohols; homo- or copolymers of dienes, or also of olefins, where the dienes may be copolymerized with styrene, (meth)acrylates or the esters of fumaric or maleic acid; homo- or copolymers of vinyl aromatics, such as styrene, methylstyrene or vinyltoluene.

3. Aqueous dispersion according to Claim 1, **characterized in that** the phosphorus compounds present are one or more compounds selected from the class consisting of the esters, amides or ester amides of alkyl- or arylphosphonic acids, of phosphoric acid or of pyrophosphoric acid, tetrakis(hydroxyalkyl)-phosphonium salts, salts of polyphosphoric acid, in particular ammonium polyphosphate, or triaryl- or trialkylphosphine oxides, diethylmethanephosphonate, dimethyl methanephosphonate, pentaerythritol di(m)ethyldiphosphonate, neopentyl (m)ethylphosphonate, triphenyl phosphate, tricresyl phosphate, resorcinol bis(diphenyl phosphate), pentraerythritol diphenyldiphosphate, neopentyl phenyl phosphate, mono-, di- and triammonium nitrilotrismethylenetriphosphonate, dimethyl 3-[(hydroxymethyl)amino]-3-oxopropylphosphonate, tetrakis(hydroxymethyl)phosphonium chloride, ammonium polyphosphate, tritolylphosphine oxide and triphenylphosphine oxide.

4. Process for preparing an aqueous dispersion according to one or more of Claims 1 to 3, **characterized in that** the constituents are mixed with one another to give an aqueous dispersion.

5. Process for preparing an aqueous dispersion according to Claim 4, **characterized in that** an aqueous polymer dispersion is mixed with the silicon compounds and phosphorus compounds.

6. Process for preparing an aqueous dispersion according to Claim 4, **characterized in that** an aqueous polymer dispersion is mixed with a solution, emulsion or dispersion of the silicon compounds and with a solution, emulsion or dispersion of the phosphorus compounds.

7. Process for preparing an aqueous dispersion according to Claim 6, **characterized in that** an aqueous polymer dispersion is mixed with an aqueous solution of the phosphorus component and an emulsion of the silicon component.

8. Process for preparing an aqueous dispersion according to Claim 6, **characterized in that** an aqueous polymer dispersion is mixed with the undiluted phosphorus component and an emulsion of the silicon component.

9. Use of dispersions according to one or more of Claims 1 to 3 or prepared according to one of Claims 4 to 8 in coating compositions, impregnating compositions or adhesives.

10. Use of dispersions according to one or more of Claims 1 to 3 or prepared according to one of Claims 4 to 8 for consolidating fibrous materials or pads.

11. Fibrous material **characterized in that** it has been treated with dispersions according to one or more of Claims 1 to 3 or dispersions prepared according to one of Claims 4 to 8.

## Revendications

1. Dispersion aqueuse pouvant être préparée à base d'au moins un organopolymère insoluble dans l'eau, d'au moins un composé silicié dispersable dans l'eau en une quantité de 0,5 à 60 % en poids, les composés siliciés présents étant un ou plusieurs parmi le groupe constitué des esters de l'acide silicique Si(OR')₄, des organo-organosilanes SiRₙ(OR')₄₋ₙ avec n = 1 à 3, des oligosiloxanes de formule générale R₃SiO(SiR₂O)ₙSiR₃ avec n = 0 à 4 ou de leurs produits d'hydrolyse et de condensation, où R' représente les radicaux alkyle identiques ou différents ou des radicaux alcoxyalkyle et R est identique ou différent et représente des radicaux alkyle ramifiés ou non ramifiés, des radicaux cycloalkyle, des radicaux alkylène, des radicaux aryle, aralkyle ou alkylaryle, où les radicaux R mentionnés peuvent également être substitués par des groupes éther, thioéther, ester, amide, nitrile, hydroxy, amine, carboxy, acide sulfonique, anhydride carboxylique et carbonyle, un tétraéthoxysilane, un méthyltri(m)éthoxysilane, un méthyltripropoxysilane, un méthyltri(éthoxyéthoxy)silane, un vinyltri(méthoxyéthoxy)silane, un (méth)acryloxypropyltriéthoxy- ou triméthoxysilane, un β-nitrile-éthyltriéthoxysilane, un mercaptopropyltriéthoxy- ou -triméthoxysilane, un phényltriéthoxysilane, un isooctyltriéthoxysilane, un dipropyldiéthoxysilane, un méthylphényldiéthoxysilane, un diphényldiméthoxysilane, un méthylvinyltri(éthoxyéthoxy)silane, ainsi que leurs disiloxanes et/ou trisiloxanes ; un hexaméthyldiéthoxytrisiloxane, un octaméthylcyclotétrasiloxane, un tétraméthyldiéthoxydisilane, un triméthyltriméthoxydisilane, un diméthyltétraméthoxydisilane, un pentaméthyldisilanedisiloxane ainsi que leurs produits d'hydrolyse et de condensation, et d'au moins un composé phosphoré hydrosoluble ou dispersable dans l'eau, ou pouvant être préparé à base d'au moins un organopolymère insoluble dans l'eau et d'au moins un ou plusieurs parmi le groupe constitué du 2-triéthoxysilyléthanephosphonate de diéthyle, du 2-triméthoxysilyléthanephosphonate de diéthyle, du 3-triméthoxysilylpropanephosphonate de diéthyle, du 2-tri[méthoxyéthoxy]silyléthanephosphonate de diéthyle et du 1,3-bis[diéthylphosphonoéthyl]tétraméthyldisiloxane.

2. Dispersion aqueuse selon la revendication 1, **caractérisée en ce que** l'organopolymère insoluble dans l'eau est un ou plusieurs polymères parmi le groupe constitué d'homopolymères ou de copolymères d'ester vinylique, renfermant un ou plusieurs motifs monomères parmi le groupe constitué des esters vinyliques d'acides alkylcarboxyliques non ramifiés ou ramifiés ; d'homopolymères ou de copolymères de (méth)acrylate renfermant un ou plusieurs motifs monomères parmi le groupe des méthacrylates et des acrylates d'alcools ; d'homopolymères ou de copolymères de monoesters ou de diesters fumarique et maléique d'alcools non ramifiés ou ramifiés ; d'homopolymères ou de copolymères de diènes, ainsi que d'oléfines, où les diènes peuvent être copolymérisés avec le styrène, des (méth)acrylates ou les esters de l'acide fumarique ou maléique ; d'homopolymères ou de copolymères de composés vinylaromatiques, tels que le styrène, le méthylstyrène ou le vinyltoluène.

3. Dispersion aqueuse selon la revendication 1, **caractérisée en ce que** les composés phosphorés présents sont un ou plusieurs parmi le groupe des esters, des amides ou des esters-amides des acides alkyl- ou arylphosphoniques, de l'acide phosphorique ou de l'acide pyrophosphorique, de sels de tétrakis(hydroxyalkyl)phosphonium, de sels de l'acide polyphosphorique, en particulier le polyphosphate d'ammonium, ou d'oxydes de triaryl- ou de trialkylphosphine, du méthanephosphonate de diéthyle, du méthanephosphonate de diméthyle, du diphosphonate de di(m)éthylpentaérythritol, du phosphonate de (m)éthylnéopentyle, du phosphate de triphényle, du phosphate de tricrésyle, du bis(diphénylphosphate) de résorcinol, du diphosphate de diphénylpentaérythritol, du phosphate de phénylnéopentyle, du nitrilotrisméthylènephosphonate de mono-, de di- et de triammonium, du 3-[(hydroxyméthyl) amino]-3-oxopropylphosphonate de diméthyle, du chlorure de tétrakis(hydroxyméthyl)phosphonium, du polyphosphate d'ammonium, de l'oxyde de tritolylphosphine et de l'oxyde de triphénylphosphine.

4. Procédé de préparation d'une dispersion aqueuse selon l'une ou plusieurs des revendications 1 à 3, **caractérisé en ce que** les constituants sont mélangés les uns avec les autres pour donner lieu à une dispersion aqueuse.

5. Procédé de préparation d'une dispersion aqueuse selon la revendication 4, **caractérisé en ce qu'**une dispersion polymère aqueuse est mélangée avec les composés siliciés et phosphorés.

6. Procédé de préparation d'une dispersion aqueuse selon la revendication 4, **caractérisé en ce qu'**une dispersion polymère aqueuse est mélangée avec une solution, une émulsion ou une dispersion des composés siliciés et une solution, une émulsion ou une dispersion des composés phosphorés.

7. Procédé de préparation d'une dispersion aqueuse selon la revendication 6, **caractérisé en ce qu'**une dispersion polymère aqueuse est mélangée avec une solution aqueuse du composant phosphoré et une émulsion du composant silicié.

8. Procédé de préparation d'une dispersion aqueuse selon la revendication 6, **caractérisé en ce qu'**une dispersion polymère aqueuse est mélangée avec le composant phosphoré à 100 % et une émulsion du composant silicié.

9. Utilisation de dispersions selon l'une ou plusieurs des revendications 1 à 3 ou préparées selon l'une quelconque des revendications 4 à 8 dans des compositions de revêtements, des compositions d'imprégnation ou des adhésifs.

10. Utilisation de dispersions selon l'une ou plusieurs des revendications 1 à 3 ou préparées selon l'une quelconque des revendications 4 à 8 pour la consolidation de matières fibreuses ou d'ouates.

11. Matière fibreuse, **caractérisée en ce qu'**elle a été traitée par des dispersions selon l'une ou plusieurs des revendications 1 à 3 ou préparées selon l'une quelconque des revendications 4 à 8.
